# EUROPÄISCHE PATENTSCHRIFT

(11) **EP 2 642 494 B1**
(45) Veröffentlichungstag und Bekanntmachung des Hinweises auf die Patenterteilung: **29.04.2020**
(21) Anmeldenummer: 13155434.7
(22) Anmeldetag: 15.02.2013
(51) Int. Cl.: H01F 7/08

(54) **Magnetischer Aktor und Ventil**
Magnet actuator and valve
Actionneur magnétique et vanne

(30) Priorität: 19.03.2012 DE 102012204299
(43) Veröffentlichungstag der Anmeldung: 25.09.2013
(73) Patentinhaber: Robert Bosch GmbH, 70442 Stuttgart (DE)
(72) Erfinder: Abel, Joerg, 70839 Gerlingen (DE); Salvat Massoni, Anna, 71640 Ludwigsburg (DE)

(56) Entgegenhaltungen:
- DE-A1-102004 023 905
- DE-A1-102005 037 951
- US-A- 4 604 600

## Beschreibung

### Stand der Technik

Die vorliegende Erfindung betrifft einen magnetischen Aktor und ein Ventil zum Einspritzen von Kraftstoff oder Stellen eines Ventilglieds, umfassend den magnetischen Aktor. Aus dem Stand der Technik sind Magnetaktoren zur Betätigung von Ventilen, beispielsweise Magneteinspritzventilen bekannt, die im Allgemeinen aus Drehteilen gefertigt sind. Um eine gute Kraftwirkung auf den Magnetanker und die Ventilnadel bei der Bestromung der Magnetspule zu erreichen, muss hierbei im Magnetkreis der magnetische Fluss gezielt gedrosselt werden, um diesen über den Anker, den Arbeitsluftspalt und den Innenpol zu leiten. Die Drosselung wird in einer Variante in einem magnetischen Rückschlusselement durch eine abschnittsweise Reduzierung der Wandstärke (geometrische Drossel) erreicht. Hierbei wird das Volumen, mit dem eine hohe magnetische Induktion bzw. Sättigung auftritt, vermindert und damit die eingespeicherte Energie verringert. Dabei reduzieren sich jedoch die Druckfestigkeit sowie die mechanische Festigkeit des Bauteils beim Montageprozess. In einer weiteren Variante wird durch Einschweißen von nichtmagnetischen Wandabschnitten in das Rückschlusselement eine magnetische Trennung realisiert. Hierbei ist es von besonderem Nachteil, dass die Fertigung bzw. Bearbeitung sehr zeitaufwändig und teuer ist. Zudem entsteht beim Einschweißen des Rückschlusselements in der Wärmezuflusszone ein undefinierter Werkstoffzustand.

Ein magnetischer Aktor nach dem Oberbegriff des Anspruchs 1 ist in DE 10 2004 023905 beschreiben.

### Offenbarung der Erfindung

Der erfindungsgemäße magnetische Aktor mit den Merkmalen des Anspruchs 1 ermöglicht durch einen vereinfachten Aufbau eine deutliche Verringerung der Material- und Fertigungskosten bei vergleichbarer dynamischer Performance (Kraftaufbau und Kraftabbau). Diese Vorteile werden erreicht durch einen magnetischen Aktor, umfassend eine Spule, einen Innenpol, einen Anker und eine magnetische Rückschlussanordnung, wobei die magnetische Rückschlussanordnung ein magnetisches Rückschlusselement aus einem Material mit zweiphasigem Gefüge aufweist.

Die Unteransprüche zeigen bevorzugte Weiterbildungen der Erfindung.

Weiter bevorzugt weist die magnetische Rückschlussanordnung ein magnetisches Rückschlusselement aus einem Material mit zweiphasigem Gefüge umfassend ferritische und austenitische Anteile auf, oder weist austenitische und martensitische Anteile auf, die aus einer Verformung von austenitischen Anteilen gebildet sind. Somit kann durch das zweiphasige Gefüge eine homogene und effektive magnetische Trenn- bzw. Drosselwirkung in der magnetischen Rückschlussanordnung des Aktors erreicht werden.

In bevorzugter Ausführung ist vorgesehen, dass das magnetische Rückschlusselement ein einteiliges Bauteil ist. Dadurch wird eine weitere Kostenreduzierung durch eine Verringerung der Bauteilanzahl erreicht. Zudem sind keine Schweißnähte zum Zusammenfügen einzelner Bauteile innerhalb des magnetischen Aktors mehr erforderlich, was in einer vereinfachten und schnelleren Fertigung resultiert.

In einer weiteren bevorzugten Ausführung ist vorgesehen, dass das magnetische Rückschlusselement eine rohrförmige Hülse ist. Durch die Ausführung als durchgehendes Rohr entfallen geometrischen Toleranzen, z. B. von Wandstärken, als Störgrößen der magnetischen Drosselwirkung. Somit ist eine geringere Toleranzstreuung der magnetischen Eigenschaften der Bauteile in der Serienfertigung erreichbar. Zudem kann auf zeit- und kostenaufwändig herzustellende Drehteile verzichtet werden, wodurch der Materialzusatz reduziert ist. Die Herstellung der rohrförmigen Hülse durch Umformen führt zu einer gezielten Einstellung der magnetischen Eigenschaften bei gleichzeitiger Materialverfestigung.

Ferner bevorzugt ist es, dass das Material umfassend ferritische und austenitische Anteile ein Duplexstahl ist. Durch die Verwendung von Duplexstahl wird die magnetische Drosselfunktion mittels der im Vergleich zu konventionellen ferromagnetischen Werkstoffen niedrigeren Sättigungsinduktion realisiert. Aufgrund der reduzierten Sättigungsinduktion können größere und durchgehende Wandstärken vorgesehen werden, die zur Festigkeitserhöhung sowie Dauerhaltbarkeit beitragen. Der Duplexwerkstoff ist zudem deutlich kostengünstiger als z. B. ein reiner Austenitwerkstoff.

In vorteilhafter Ausgestaltung liegt ein Anteil Y des ferritischen Anteils zwischen 25 % und 75 % und ein Anteil Z des austenitischen Anteils beträgt Z = 1-Y. Weiterhin bevorzugt sind die ferritischen und austentischen Anteile gleich (50:50). Durch eine Variation der Materialanteile ist somit eine präzise Einstellung der Funktionseigenschaften des erfindungsgemäßen Aktors durch Abstimmung verschiedener geometrischer Parameter des Magnetkreises, wie z. B. Deckeldicke, Bodendicke, Ankerlänge, oder Hülsenwandstärke, auf die magnetischen Eigenschaften des verwendeten Hülsenwerkstoffs möglich.

Weiterhin bevorzugt überdeckt das magnetische Rückschlusselement in Axialrichtung den Innenpol und den Anker jeweils zumindest teilweise. Dadurch kann die Spule durch das Rückflusselement gegenüber dem Kraftstoffmedium abgeschottet werden, so dass die Anforderungen an die Materialbeständigkeit der Spule deutlich reduziert sind, was zu einer weiteren Kosteneinsparung beiträgt.

Die Erfindung umfasst des Weiteren ein Ventil zum Einspritzen von Kraftstoff oder Stellen eines Ventilglieds umfassend einen erfindungsgemäßen magnetischen Aktor. Die im Rahmen des erfindungsgemäßen magnetischen Aktors beschriebenen Ausgestaltungen finden entsprechend bevorzugte Anwendung auf das erfindungsgemäße Ventil. Besonders vorteilhaft wird das Ventil für eine Saugrohreinspritzung oder Benzindirekteinspritzung verwendet. Ferner umfasst die Erfindung die Verwendung eines Materials mit einem zweiphasigen Gefüge in einer magnetischen Rückschlussanordnung. Das zweiphasige Gefüge umfasst bevorzugt ferritische und austenitische Anteile oder austenitische Anteile und z.B. durch Verformung von austenitischen Anteilen entstandene martensitische Anteile.

### Kurze Beschreibung der Zeichnung

Nachfolgend wird ein bevorzugtes Ausführungsbeispiel der Erfindung unter Bezugnahme auf die begleitende Zeichnung im Detail beschrieben. In der Zeichnung zeigt:
- Figur 1: einen Schnitt durch einen erfindungsgemäßen magnetischen Aktor gemäß einem bevorzugten Ausführungsbeispiel, und
- Figur 2: eine schematische Ansicht eines Einspritzventils, das den magnetischen Aktor gemäß des bevorzugten Ausführungsbeispiels der Erfindung umfasst.

### Ausführungsform der Erfindung

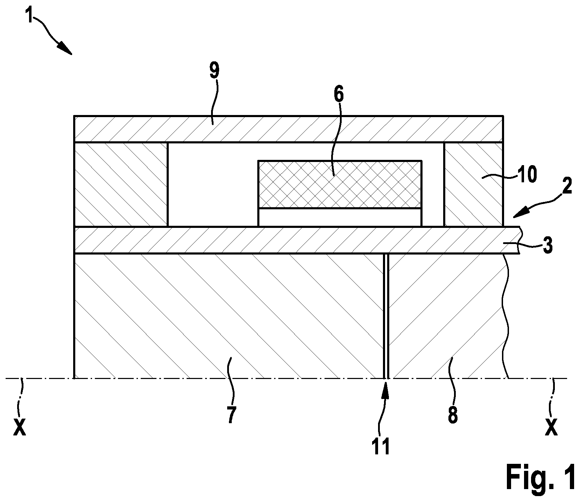

Im Folgenden wird anhand der Figur 1 ein bevorzugtes Ausführungsbeispiel eines magnetischen Aktors 1 beschrieben.

Figur 1 zeigt den zur besseren Übersichtlichkeit halbseitig geschnitten dargestellten magnetischen Aktor 1, umfassend eine magnetische Rückschlussanordnung 2 mit einem in Axialrichtung X-X einstückig als Hülse ausgebildeten rohrförmigen Rückschlusselement 3. Radial außerhalb des Rückschlusselements 3 ist eine Spule 6 angeordnet. Radial innerhalb des Rückschlusselements 3 liegt ein gegenüber dem Rückschlusselement 3 ortsfester Innenpol 7 am Rückschlusselement 3 an. An diesem Innenpol 7 schließt sich ein Anker 8 an. Dieser Anker 8 ist innerhalb des Rückschlusselements 3 in Axialrichtung X-X beweglich. Zwischen dem Innenpol 7 und dem Anker 8 befindet sich einer kleiner Ankerspalt 11.

Darüber hinaus umfasst der magnetische Aktor 1 ein Gehäuse 9, das mit einem Deckel 10 verschlossen ist. Das Rückschlusselement 3, der Innenpol 7, der Anker 8, der Deckel 10, das Gehäuse 9 und die Spule 6 sind zylindrisch ausgebildet. Die Axialrichtung X-X bildet die zylindrische Mittelachse all dieser Bauteile.

Das zylindrische Rückschlusselement 3 überdeckt in Axialrichtung X-X den Innenpol 7 und den Arbeitsspalt 11 vollständig und den Anker 8 teilweise. Alternativ kann das Rückschlusselement 3 auch eine axiale Länge aufweisen, die den Innenpol 7 nur teilweise überdeckt. Ferner überdeckt das Rückschlusselement 3 die Spule 6 in Axialrichtung X-X vollständig.

Das Rückschlusselement 3 ist aus einem Duplexstahl gebildet, der ferritische und austenitische Anteile aufweist. Der ferritische Materialanteil liegt hierbei vorzugsweise zwischen 25 % und 75 %, wobei der austenitische Anteil einen jeweils komplementären Prozentsatz aufweist. Alternativ kann auch ein Duplexstahl mit gleichgroßen ferritischen und austenitischen Anteilen verwendet werden. Zudem kann auch ein Duplexstahl mit austenitischen Anteilen und martensitischen Anteilen eingesetzt werden, die z.B. aus einer Verformung von austenitischen Anteilen gebildet sind.

Durch den erfindungsgemäßen magnetischen Aktor können die Vorteile einer magnetischen Trennung und einer magnetischen Drossel durch die Verwendung des einstückigen magnetischen Rückschlusselements 3 aus einem Material mit zweiphasigem Gefüge kombiniert werden. Die gezielte Abstimmung von Werkstoff- und Geometrieeigenschaften ermöglicht eine Verbesserung der magnetischen Eigenschaften des Magnetkreises und eine daraus resultierende optimierte Ventilfunktion mit erhöhter Dynamik bei hohem Innendruck.

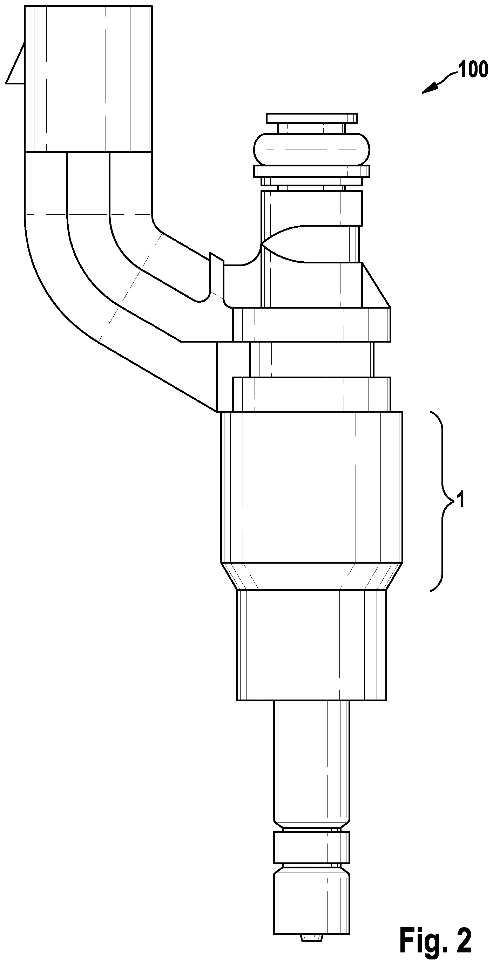

Figur 2 zeigt ein Einspritzventil 100. Dieses Einspritzventil 100 weist zur Bewegung des Ankers 8 einen magnetischen Aktor gemäß des in Figur 1 dargestellten Ausführungsbeispiels der Erfindung auf.

## Patentansprüche

1. Magnetischer Aktor (1), umfassend:
- eine Spule (6)
- einen Innenpol (7)
- einen Anker (8), und
- eine magnetische Rückschlussanordnung (2), **dadurch gekennzeichnet, dass** die magnetische Rückschlussanordnung (2) ein magnetisches Rückschlusselement (3) aus einem Material mit zweiphasigem Gefüge aufweist.

2. Magnetischer Aktor nach Anspruch 1,
- wobei die magnetische Rückschlussanordnung (2) ein magnetisches Rückschlusselement (3) aus einem Material mit zweiphasigem Gefüge umfassend ferritische und austenitische Anteile aufweist, oder
- wobei die magnetische Rückschlussanordnung (2) ein magnetisches Rückschlusselement (3) aus einem Material mit zweiphasigem Gefüge umfassend austenitische und martensitische Anteile, die aus einer Verformung von austenitischen Anteilen gebildet sind, aufweist.

3. Magnetischer Aktor nach einem der vorhergehenden Ansprüche, **dadurch gekennzeichnet, dass** das magnetische Rückschlusselement (3) ein einteiliges Bauteil ist.

4. Magnetischer Aktor nach einem der vorhergehenden Ansprüche, **dadurch gekennzeichnet, dass** das magnetische Rückschlusselement (3) eine rohrförmige Hülse ist.

5. Magnetischer Aktor nach einem der Ansprüche 2 bis 4, **dadurch gekennzeichnet, dass** das Material umfassend ferritische und austenitische Anteile ein Duplexstahl ist.

6. Magnetischer Aktor nach Anspruch 5 **dadurch gekennzeichnet, dass** ein Anteil Y des ferritischen Anteils zwischen 25 % und 75 % liegt und ein Anteil Z des austenitischen Anteils Z = 1 - Y beträgt, und insbesondere ein Anteil des ferritischen Anteils und ein Anteil des austenitischen Anteils gleich sind.

7. Magnetischer Aktor nach einem der vorhergehenden Ansprüche, **dadurch gekennzeichnet, dass** das magnetische Rückschlusselement (3) in Axialrichtung (X - X) den Innenpol (7) und den Anker (8) jeweils zumindest teilweise überdeckt.

8. Ventil, insbesondere zum Einspritzen von Kraftstoff oder Stellen eines Ventilglieds, umfassend einen magnetischen Aktor (1) nach einem der vorhergehenden Ansprüche.

## Claims

1. Magnetic actuator (1), comprising:
- a coil (6),
- an inner pole (7),
- an armature (8), and
- a magnetic return arrangement (2),
**characterized in that** the magnetic return arrangement (2) has a magnetic return element (3) composed of a material with a two-phase structure.

2. Magnetic actuator according to Claim 1,
- wherein the magnetic return arrangement (2) has a magnetic return element (3) composed of a material with a two-phase structure comprising ferritic and austenitic fractions, or
- wherein the magnetic return arrangement (2) has a magnetic return element (3) composed of a material with a two-phase structure comprising austenitic and martensitic fractions, which are formed from a deformation of austenitic fractions.

3. Magnetic actuator according to any of the preceding claims, **characterized in that** the magnetic return element (3) is a single-piece component.

4. Magnetic actuator according to any of the preceding claims, **characterized in that** the magnetic return element (3) is a tubular sleeve.

5. Magnetic actuator according to any of Claims 2 to 4, **characterized in that** the material comprising ferritic and austenitic fractions is a duplex steel.

6. Magnetic actuator according to Claim 5, **characterized in that** a fraction Y of the ferritic fraction lies between 25% and 75%, and a fraction Z of the austenitic fraction amounts to Z = 1 - Y, and in particular a fraction of the ferritic fraction and a fraction of the austenitic fraction are equal.

7. Magnetic actuator according to any of the preceding claims, **characterized in that** the magnetic return element (3) in each case at least partially covers the inner pole (7) and the armature (8) in an axial direction (X - X).

8. Valve, in particular for injecting fuel or adjusting a valve element, comprising a magnetic actuator (1) according to any of the preceding claims.

## Revendications

1. Actionneur magnétique (1), comprenant :
- une bobine (6),
- un pôle intérieur (7),
- un induit (8), et
- un agencement de culasse magnétique (2),
**caractérisé en ce que**
l'agencement de culasse magnétique (2) présente un élément de culasse magnétique (3) constitué d'un matériau à structure biphasée.

2. Actionneur magnétique selon la revendication 1,
- dans lequel l'agencement de culasse magnétique (2) présente un élément de culasse (3) constitué d'un matériau à structure biphasée comprenant des proportions ferritiques et austénitiques, ou
- dans lequel l'agencement de culasse magnétique (2) présente un élément de culasse magnétique (3) constitué d'un matériau à structure biphasée comprenant des proportions austénitiques et martensitiques, qui sont formées à partir d'une déformation de proportions austénitiques.

3. Actionneur magnétique selon l'une quelconque des revendications précédentes, **caractérisé en ce que** l'élément de culasse magnétique (3) est un composant d'une seule pièce.

4. Actionneur magnétique selon l'une quelconque des revendications précédentes, **caractérisé en ce que** l'élément de culasse magnétique (3) est une douille tubulaire.

5. Actionneur magnétique selon l'une quelconque des revendications 2 à 4, **caractérisé en ce que** le matériau comprenant des proportions ferritiques et austénitiques est un acier duplex.

6. Actionneur magnétique selon la revendication 5, **caractérisé en ce qu'**une proportion Y de la proportion ferritique est comprise entre 25 % et 75 % et une proportion Z de la proportion austénitique vaut Z = 1 - Y, et en particulier, une proportion de la proportion ferritique et une proportion de la proportion austénitique sont égales.

7. Actionneur magnétique selon l'une quelconque des revendications précédentes, **caractérisé en ce que** l'élément de culasse magnétique (3) recouvre à chaque fois au moins partiellement dans la direction axiale (X - X) le pôle intérieur (7) et l'induit (8).

8. Soupape, en particulier pour l'injection de carburant ou parties d'un organe de soupape comprenant un actionneur magnétique (1) selon l'une quelconque des revendications précédentes.
